# EUROPÄISCHE PATENTSCHRIFT

(11) **EP 3 279 473 B1**
(45) Veröffentlichungstag und Bekanntmachung des Hinweises auf die Patenterteilung: **08.06.2022**
(21) Anmeldenummer: 17184998.7
(22) Anmeldetag: 04.08.2017
(51) Int. Cl.: F04B 17/04, F04B 53/16, F04B 53/22

(54) **SCHWINGKOLBENPUMPVORRICHTUNG**
PISTON PUMP DEVICE
DISPOSITIF FORMANT POMPE À PISTON OSCILLANT

(30) Priorität: 05.08.2016 DE 102016114568
(43) Veröffentlichungstag der Anmeldung: 07.02.2018
(73) Patentinhaber: Sysko AG, 7000 Chur (CH)
(72) Erfinder: Helbling, Norbert, 8645 Jona (CH); Wißkirchen, Michael, 88410 Bad Wurzach (DE); Partzsch, Fred, 88099 Neukirch (DE)
(74) Vertreter: Daub, Thomas

(56) Entgegenhaltungen:
- EP-A1- 2 993 346
- DE-A1-102007 007 297
- DE-A1-102010 009 152
- DE-B- 1 273 992

## Beschreibung

### Stand der Technik

Aus der DE 10 2010 044 775 A1 ist bereits eine Schwingkolbenpumpe bekannt, welche ein Kompressionskammergehäuse aufweist, welches einen geraden Fluidkanal umfasst.

Ferner sind aus der DE 10 2010 009152 A1 und der DE 12 73 992 B bereits Schwingkolbenpumpen mit einem Kompressionskammergehäuse bekannt, welches wenigstens einen Fluidkanal umfasst, wobei der Fluidkanal zumindest eine Abwinklung aufweist.

Die Aufgabe der Erfindung besteht insbesondere darin, eine gattungsgemäße Vorrichtung mit verbesserten Eigenschaften hinsichtlich einer Flexibilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Schwingkolbenpumpvorrichtung mit zumindest einem Kompressionskammergehäuse, welches wenigstens einen Fluidkanal umfasst, wobei der Fluidkanal zumindest eine Abwinklung aufweist, und mit einer Kolbeneinheit, die dazu vorgesehen ist, in einem Betriebszustand ein Fluid in zumindest einer Hubrichtung zu fördern, wobei die Kolbeneinheit einen Kolben umfasst, der einen Kolbengrundkörper und einen Kolbenfortsatz umfasst, und wobei der Kolben in zumindest einem Betriebszustand zumindest teilweise in dem Kompressionskammergehäuse angeordnet ist.

Es wird vorgeschlagen, dass die Schwingkolbenpumpvorrichtung ein Pumpgehäuse aufweist, wobei das Pumpgehäuse einen Fluideinlass und einen Fluidauslass aufweist, wobei das Kompressionskammergehäuse an dem Pumpgehäuse, insbesondere an dem Fluidauslass, angeordnet ist, wobei der Kolbenfortsatz eine Fortsatzausnehmung aufweist, wobei die Fortsatzausnehmung zum Auslass eines Fluids vorgesehen ist. Hierdurch kann vorteilhaft eine Schwingkolbenpumpvorrichtung mit verbesserten Eigenschaften hinsichtlich einer Flexibilität bereitgestellt werden. Insbesondere kann eine Einbaulage der Schwingkolbenpumpvorrichtung besonders flexibel gestaltet werden. Besonders vorteilhaft kann eine Bauteilgröße, insbesondere eine Bauteillänge, der Schwingkolbenpumpvorrichtung verringert werden. Ferner können vorteilhaft zusätzliche Bauteile, wie etwa Adapter, vermieden werden, wodurch weitere Kosten eingespart werden können. Insbesondere kann vermieden werden, dass eine Pumpleistung und/oder ein Fluiddruck durch Verwendung von zusätzlichen Bauteilen, für welche die Schwingkolbenpumpvorrichtung insbesondere nicht ausgelegt ist, wie etwa von Adaptern, negativ beeinflusst wird.

Unter einer "Schwingkolbenpumpvorrichtung" soll in diesem Zusammenhang insbesondere zumindest ein Teil, insbesondere zumindest eine Unterbaugruppe, einer Schwingkolbenpumpe, welche insbesondere für einen Einsatz in einem Haushaltsgerät, vorzugsweise einer Kaffeemaschine, vorgesehen ist, verstanden werden. Insbesondere kann die Schwingkolbenpumpvorrichtung auch die gesamte Schwingkolbenpumpe umfassen. Die Schwingkolbenpumpvorrichtung ist insbesondere für einen Betrieb mit bis zu höchstens 25 bar Fluiddruck vorgesehen. Insbesondere liegt der Fluiddruck in einem Arbeitsbereich der Schwingkolbenpumpvorrichtung zwischen 0,5 bar und 3 bar, bevorzugt zwischen 3 bar und 8 bar und besonders bevorzugt zwischen 8 bar und 15 bar. Unter "vorgesehen" soll insbesondere speziell ausgestaltet, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Kompressionskammergehäuse" soll in diesem Zusammenhang insbesondere ein Gehäuse verstanden werden, welches zumindest eine Kompressionskammer umfasst, in der insbesondere in zumindest einem Betriebszustand mittels eines Kolbens ein Fluid komprimiert wird. Unter einem "Fluid" soll in diesem Zusammenhang insbesondere eine Flüssigkeit, vorzugsweise Wasser, ein Gas und/oder ein Gas-Flüssigkeits-Gemisch verstanden werden. Unter einem "Fluidkanal" soll insbesondere eine Baueinheit verstanden werden, die zumindest teilweise zu einer Führung eines Fluidstroms vorgesehen ist und die den Fluidstrom, in einer Hauptströmungsrichtung betrachtet, unmittelbar zumindest teilweise, vorzugsweise auf drei Seiten und besonders vorteilhaft vollständig umschließt. Vorzugsweise ist eine Erstreckung des Fluidkanals entlang der Hauptströmungsrichtung des Fluidstroms zumindest 1-mal, insbesondere wenigstens 3-mal und vorteilhaft zumindest 5-mal so lang wie wenigstens eine Querschnittserstreckung an einem Punkt des Fluidkanals senkrecht zu der Hauptströmungsrichtung des Fluidstroms an dem Punkt.

Unter einer "Abwinklung" soll in diesem Zusammenhang insbesondere ein Zwischenabschnitt des Fluidkanals verstanden werden, entlang dessen eine Hauptströmungsrichtung des Fluidkanals variiert. Vorzugsweise bildet der Zwischenabschnitt zumindest eine Biegung oder einen Knick aus. Insbesondere weist der Fluidkanal zumindest einen ersten Teilabschnitt und zumindest einen zweiten Teilabschnitt auf, welche insbesondere zueinander winklig ausgerichtet sind. Insbesondere ist der Zwischenabschnitt vorzugsweise unmittelbar zwischen dem ersten Teilabschnitt und dem zweiten Teilabschnitt angeordnet. Vorteilhaft weist der erste Teilabschnitt eine erste Haupterstreckungsrichtung und/oder eine erste Hauptströmungsrichtung auf und der zweite Teilabschnitt weist zumindest eine zweite Haupterstreckungsrichtung und/oder zumindest eine zweite Hauptströmungsrichtung auf, wobei die erste Haupterstreckungsrichtung und/oder die erste Hauptströmungsrichtung winklig zur zweiten Haupterstreckungsrichtung und/oder zur zweiten Hauptströmungsrichtung ausgerichtet ist. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Unter "winklig ausgerichtet" soll in diesem Zusammenhang insbesondere von parallel und/oder antiparallel verschieden ausgerichtet verstanden werden.

Um vorteilhaft Bauteile und insbesondere Bauteilkosten zu verringern, wird vorgeschlagen, dass die Schwingkolbenpumpvorrichtung wenigstens ein Ventilkammergehäuse umfasst, das zumindest teilweise, vorzugsweise zumindest zu einem Großteil und besonders bevorzugt vollständig, einstückig mit dem Kompressionskammergehäuse ausgebildet ist. Unter einem "Ventilkammergehäuse" soll insbesondere ein Gehäuse verstanden werden, welches zumindest eine Ventilkammer umfasst, in welcher insbesondere zumindest ein Ventil der Schwingkolbenpumpvorrichtung, insbesondere fest, angeordnet ist. Unter dem Ausdruck "zumindest zu einem Großteil" soll dabei insbesondere zumindest zu 55 %, vorteilhaft zumindest zu 65 %, vorzugsweise zumindest zu 75 %, besonders bevorzugt zumindest zu 85 % und besonders vorteilhaft zumindest zu 95 % verstanden werden. Darunter, dass "zumindest ein Objekt zumindest teilweise einstückig mit zumindest einem weiteren Objekt" ausgebildet ist, soll insbesondere verstanden werden, dass zumindest ein Bauteil des Objekts einstückig mit zumindest einem weiteren Bauteil des weiteren Objekts ausgebildet ist. Unter "einstückig" soll ferner insbesondere zumindest stoffschlüssig verbunden verstanden werden. Der Stoffschluss kann beispielsweise durch einen Klebeprozess, durch einen Anspritzprozess, durch einen Schweißprozess, durch einen Lötprozess und/oder durch einen anderen, einem Fachmann sinnvoll erscheinenden Prozess hergestellt werden. Vorteilhaft soll unter "einstückig" jedoch in einem Stück geformt verstanden werden. Vorzugsweise wird dieses eine Stück dabei aus einem einzelnen Rohling und/oder einem Guss hergestellt. Der erste Teilabschnitt und/oder der Zwischenabschnitt des Fluidkanals bilden insbesondere zumindest teilweise, vorzugsweise zumindest zu einem Großteil und besonders bevorzugt vollständig die Kompressionskammer aus.

Der zweite Teilabschnitt des Fluidkanals bildet insbesondere zumindest teilweise, vorzugsweise zumindest zu einem Großteil und besonders bevorzugt vollständig die Ventilkammer aus.

In einer bevorzugten Ausgestaltung der Erfindung wird vorgeschlagen, dass die Abwinklung einen Winkel von zumindest 45°, insbesondere um welchen die Hauptströmungsrichtung entlang des Zwischenabschnitts variiert, aufweist. Vorteilhaft weist die Schwingkolbenpumpvorrichtung zumindest eine Kolbeneinheit auf, welche ein Fluid in zumindest einer Hubrichtung fördert, die innerhalb der Abwinklung mit zumindest einer Hauptströmungsrichtung einen Winkel von zumindest 45°, insbesondere von zumindest 60°, bevorzugt von zumindest 75° und besonders bevorzugt von zumindest im Wesentlichen 90° einschließt. Vorzugsweise schließt der erste Teilabschnitt, insbesondere die erste Haupterstreckungsrichtung und/oder die erste Hauptströmungsrichtung, mit dem zweiten Teilabschnitt, insbesondere der zweiten Haupterstreckungsrichtung und/oder der zweiten Hauptströmungsrichtung, des Fluidkanals zumindest einen Winkel von zumindest 45°°, insbesondere von zumindest 60°, vorteilhaft von zumindest 75° und besonders bevorzugt von zumindest im Wesentlichen 90° ein. Unter einem Winkel von "zumindest im Wesentlichen 90°" soll insbesondere ein Winkel von 90° insbesondere mit einer Abweichung von höchstens 8°, vorzugsweise von höchstens 5° und besonders bevorzugt von höchstens 2° verstanden werden. Insbesondere sind die erste Haupterstreckungsrichtung und/oder die erste Hauptströmungsrichtung zumindest im Wesentlichen parallel zu der Hubrichtung. Insbesondere sind die zweite Haupterstreckungsrichtung und/oder die zweite Hauptströmungsrichtung zumindest im Wesentlichen senkrecht zu der Hubrichtung. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung vorzugsweise eine Abweichung insbesondere kleiner als 8°, vorteilhaft kleiner als 5° und besonders vorteilhaft kleiner als 2° aufweist. Der Ausdruck "zumindest im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel insbesondere eine Abweichung von insbesondere kleiner als 8°, vorteilhaft kleiner als 5° und besonders vorteilhaft kleiner als 2° aufweist. Hierdurch kann eine Anschlussmöglichkeit der Schwingkolbenpumpvorrichtung verbessert werden.

In einer besonders bevorzugten Ausgestaltung der Erfindung wird vorgeschlagen, dass die Kolbeneinheit zumindest einen Kolben aufweist, welcher in zumindest einem Betriebszustand zumindest teilweise in dem Kompressionskammergehäuse, insbesondere in der Kompressionskammer, angeordnet ist. Hierdurch kann eine Bauteillänge weiter reduziert werden.

Ferner wird vorgeschlagen, dass die Schwingkolbenpumpvorrichtung zumindest ein Pumpengehäuse umfasst, relativ zu welchem das Kompressionskammergehäuse und/oder insbesondere das Ventilkammergehäuse, insbesondere in einem Montageschritt, in verschiedenen Drehlagen um eine Drehachse anordenbar ist. Die Drehachse ist insbesondere zumindest im Wesentlichen parallel zu der Hubrichtung, der ersten Haupterstreckungsrichtung und/oder der ersten Hauptströmungsrichtung. Ferner ist die Drehachse zumindest im Wesentlichen senkrecht zur zweiten Hauptströmungsrichtung und/oder zur zweiten Haupterstreckungsrichtung ausgerichtet. Insbesondere ist das Kompressionskammergehäuse kraft- und/oder formschlüssig mit dem Pumpgehäuse verbunden. Unter "kraft- und/oder formschlüssig verbunden" soll dabei insbesondere verbunden durch eine lösbare Verbindung verstanden werden, wobei eine Haltekraft zwischen zwei Bauteilen vorzugsweise durch einen geometrischen Eingriff der Bauteile ineinander und/oder durch eine Reibkraft zwischen den Bauteilen übertragen wird. Das Kompressionskammergehäuse ist insbesondere an dem Pumpgehäuse angeflanscht, insbesondere mittels eines Flanschrings. Es ist denkbar, dass das Kompressionsgehäuse stoffschlüssig mit dem Pumpgehäuse verbunden und/oder insbesondere einstückig mit dem Pumpgehäuse ausgebildet ist. Unter "stoffschlüssig verbunden" soll insbesondere verstanden werden, dass Masseteile durch atomare oder molekulare Kräfte zusammengehalten werden, wie beispielsweise beim Löten, Schweißen, Kleben und/oder Vulkanisieren. Alternativ könnte das Kompressionsgehäuse zumindest teilweise, insbesondere zumindest zu einem Großteil und besonders bevorzugt vollständig einstückig mit dem Pumpgehäuse ausgebildet sein. Hierdurch kann eine Flexibilität, insbesondere in Bezug auf einen Einbau und eine Einbaulage der Schwingkolbenpumpvorrichtung, weiter verbessert werden.

Um insbesondere eine Bauteillänge der Schwingkolbenpumpvorrichtung besonders zu reduzieren, wird vorgeschlagen, dass die Schwingkolbenpumpvorrichtung zumindest ein Ventil umfasst, welches strömungstechnisch hinter der Abwinklung des Fluidkanals, insbesondere in der Ventilkammer, angeordnet ist. Das Ventil ist insbesondere innerhalb des zweiten Teilabschnitts des Fluidkanals angeordnet. Das Ventil ist vorzugsweise als ein Rückschlagventil ausgebildet. Vorzugsweise ist das Ventil als ein Federventil ausgebildet.

In einer besonders bevorzugten Ausgestaltung der Erfindung wird vorgeschlagen, dass das Kompressionskammergehäuse ein Spritzgussteil ist. Insbesondere ist das Kompressionskammergehäuse zumindest teilweise, vorzugsweise zumindest zu einem Großteil und besonders bevorzugt vollständig aus einem Kunststoff ausgebildet. Vorzugsweise handelt es sich bei dem Kunststoff um Polyamid, insbesondere Polyamid 6.6. Das Kompressionskammergehäuse ist insbesondere zumindest teilweise aus Glasfaser gebildet. Insbesondere ist der Kunststoff, aus welchem das Kompressionskammergehäuse gebildet ist, mittels Glasfaser verstärkt. Hierdurch kann vorteilhaft eine besonders kostengünstige und einfache Herstellung erfolgen. Insbesondere kann eine Stabilität und vorzugsweise eine Dichtigkeit des Kompressionskammergehäuses verbessert werden, da insbesondere zusätzliche Schnittstellen, wie beispielsweise Adapter, vermieden werden.

Die Schwingkolbenpumpvorrichtung soll hierbei insbesondere nicht auf die oben beschriebene Anwendung und Ausführungsform beschränkt sein. Insbesondere kann die Schwingkolbenpumpvorrichtung zu einer Erfüllung einer hierin beschriebenen Funktionsweise eine von einer hierin genannten Anzahl von einzelnen Elementen, Bauteilen und Einheiten abweichende Anzahl aufweisen. Vorzugsweise sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein als Kaffeemaschine ausgebildetes Haushaltsgerät mit einer Schwingkolbenpumpvorrichtung,
- Fig. 2: einen Teil der Schwingkolbenpumpvorrichtung in einer perspektivischen Ansicht und
- Fig. 3: einen Teil der Schwingkolbenpumpvorrichtung in einer Schnittansicht.

### Beschreibung des Ausführungsbeispiels

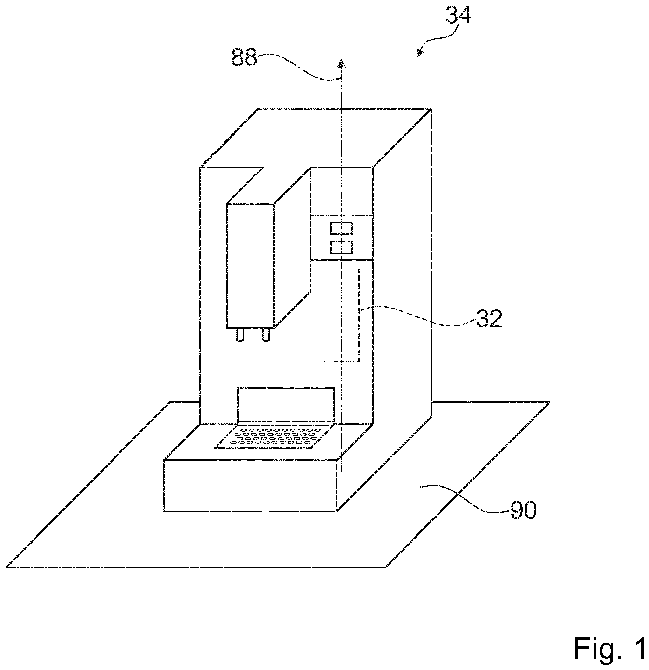

In Fig. 1 ist schematisch ein als Kaffeemaschine ausgebildetes Haushaltsgerät 34 in einer perspektivischen Darstellung gezeigt. Das Haushaltsgerät 34 umfasst eine Schwingkolbenpumpvorrichtung, welche eine Schwingkolbenpumpe 32 des Haushaltsgeräts 34 ausbildet. Die Schwingkolbenpumpe 32 ist in dem Haushaltsgerät 34 in einer vertikalen Einbaulage verbaut. Eine Haupterstreckungsrichtung 88 der Schwingkolbenpumpe 32 ist zumindest im Wesentlichen senkrecht zu einem Untergrund 90, auf welchem das Haushaltsgerät 34 in einem Betriebszustand steht.

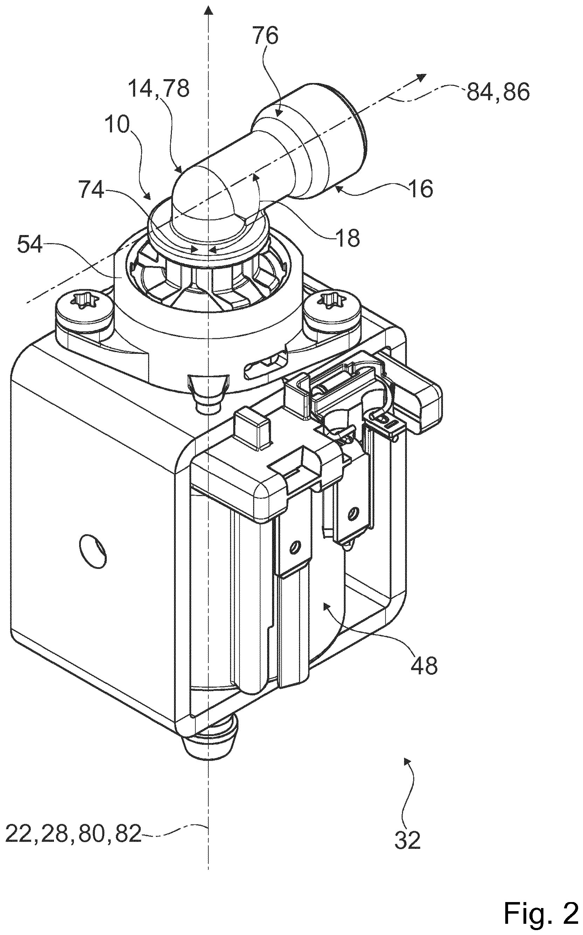

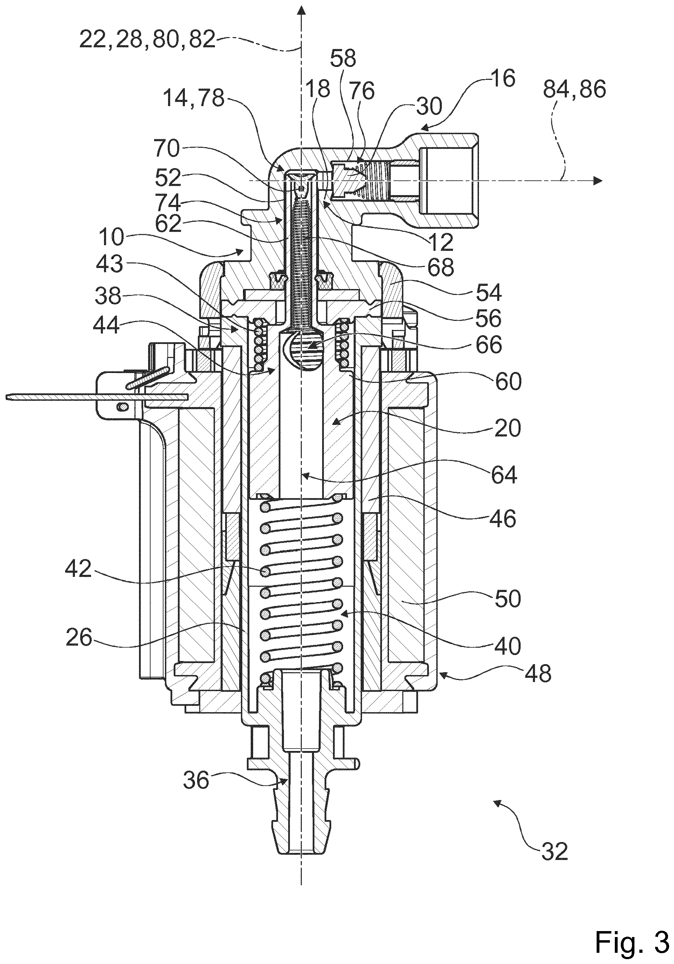

In Fig. 2 und 3 ist ein Teil der Schwingkolbenpumpvorrichtung einmal in einer perspektivischen und einmal in einer Schnittansicht dargestellt. Die Schwingkolbenpumpvorrichtung weist ein Pumpgehäuse 26 auf. Das Pumpgehäuse 26 begrenzt einen Innenraum 40. Das Pumpgehäuse 26 weist einen Fluideinlass 36 auf. Ferner weist das Pumpgehäuse 26 einen Fluidauslass 38 auf. Ferner weist die Schwingkolbenpumpvorrichtung eine Kolbeneinheit 20 auf. Die Kolbeneinheit 20 ist in dem Innenraum 40 angeordnet. Die Kolbeneinheit 20 ist dazu vorgesehen, in einem Betriebszustand ein Fluid in zumindest einer Hubrichtung 22 zu fördern. Die Kolbeneinheit 20 umfasst einen Kolben 44. Der Kolben 44 ist in dem Pumpgehäuse 26 verschiebbar gelagert. Der Kolben 44 weist einen Kolbengrundkörper 60 auf. Der Kolben 44 umfasst ferner einen Kolbenfortsatz 62. Der Kolbenfortsatz 62 weist einen von dem Durchmesser des Kolbengrundkörpers 60 verschiedenen Durchmesser auf. Der Kolbengrundkörper 60 weist eine erste Ausnehmung 64 auf. Die erste Ausnehmung 64 erstreckt sich in einer Haupterstreckungsrichtung des Kolbens 44. Die erste Ausnehmung 64 ist zu einer Fluidzufuhr vorgesehen. Der Kolben 44 weist eine zweite Ausnehmung 66 auf. Die zweite Ausnehmung 66 erstreckt sich zumindest im Wesentlichen senkrecht zu der Haupterstreckungsrichtung des Kolbens 44. Die zweite Ausnehmung 66 ist zu einer Fluidzufuhr vorgesehen. Der Kolbenfortsatz 62 weist eine Fortsatzausnehmung 68 auf. Die Fortsatzausnehmung 68 ist zum Auslass eines Fluids vorgesehen. Die Kolbeneinheit 20 weist zumindest ein Kolbenventil 70 auf. Das Kolbenventil 70 ist als ein Rückschlagventil ausgebildet. Das Kolbenventil 70 ist zumindest teilweise in der Fortsatzausnehmung 68 angeordnet. Das Kolbenventil 70 verschließt in zumindest einem Betriebszustand die Fortsatzausnehmung 68.

Die Schwingkolbenpumpvorrichtung umfasst eine Aktoreinheit 48. Die Aktoreinheit 48 ist dazu vorgesehen, den Kolben 44 zu verschieben und insbesondere aus einer Ruhelage heraus auszulenken. Die Aktoreinheit 48 weist eine Magnetspule 50 auf. Ferner weist die Aktoreinheit 48 ein magnetisches Element 46 auf. Das magnetische Element 46 ist Teil der Kolbeneinheit 20. Das magnetische Element 46 ist einstückig mit dem Kolben 44 ausgebildet. In einem Betriebszustand der Aktoreinheit 48 wechselwirkt die Magnetspule 50 mit dem magnetischen Element 46 und verschiebt den Kolben 44 aus einer Ruhelage.

Die Kolbeneinheit 20 umfasst ein erstes elastisches Element 42. Das erste elastische Element 42 ist als eine Spiralfeder ausgebildet. Das erste elastische Element 42 ist in dem Innenraum 40 des Pumpgehäuses 26 angeordnet. Das erste elastische Element 42 ist zwischen dem Fluideinlass 36 und dem Kolben 44 angeordnet. Das erste elastische Element 42 stützt sich an dem Pumpgehäuse 26 und dem Kolben 44 ab. Das erste elastische Element 42 ist dazu vorgesehen, in einem Betriebszustand den Kolben 44 in eine Ruhelage zurückzuführen. Ferner weist die Kolbeneinheit 20 ein zweites elastisches Element 43 auf. Das zweite elastische Element 43 ist als eine Spiralfeder ausgebildet. Das zweite elastische Element 43 ist in dem Innenraum 40 des Pumpgehäuses 26 angeordnet. Das zweite elastische Element 43 ist zwischen dem Kolben 44 und dem Fluidauslass 38 angeordnet. Das zweite elastische Element 43 stützt sich an dem Kolben 44 und dem Pumpgehäuse 26 ab. Das zweite elastische Element 43 ist dazu vorgesehen, in einem Betriebszustand den Kolben 44 in eine Ruhelage zurückzuführen.

Die Schwingkolbenpumpvorrichtung umfasst ein Kompressionskammergehäuse 10. Das Kompressionskammergehäuse 10 umfasst zumindest eine Kompressionskammer 52. Der Kolben 44 ist in zumindest einem Betriebszustand zumindest teilweise in dem Kompressionskammergehäuse 10 angeordnet. Der Kolbenfortsatz 62 ist in dem Betriebszustand in der Kompressionskammer 52 angeordnet. Der Kolbenfortsatz 62 schließt bündig mit Seitenwänden der Kompressionskammer 52 ab.

Das Kompressionskammergehäuse 10 ist ein Spritzgussteil. Das Kompressionskammergehäuse 10 ist zumindest teilweise aus einem Kunststoff ausgebildet. Der Kunststoff ist Polyamid, insbesondere Polyamid 6.6. Das Kompressionskammergehäuse 10 ist zumindest teilweise aus Glasfaser gebildet. Der Kunststoff, aus welchem das Kompressionskammergehäuse 10 zumindest teilweise gebildet ist, ist mittels Glasfaser verstärkt.

Das Kompressionskammergehäuse 10 ist relativ zu dem Pumpgehäuse 26 in verschiedenen Drehlagen um eine Drehachse 28 anordenbar. Das Kompressionskammergehäuse 10 ist an dem Pumpgehäuse 26, insbesondere an dem Fluidauslass 38, angeordnet. Das Kompressionskammergehäuse 10 ist kraft- und/oder formschlüssig mit dem Pumpgehäuse 26 verbunden. Das Kompressionsgehäuse 10 ist an das Pumpgehäuse 26 angeflanscht. Die Schwingkolbenpumpvorrichtung umfasst einen Flansch 54. Mittels des Flansches 54 ist das Kompressionsgehäuse 10 an das Pumpgehäuse 26 angebunden. Der Flansch 54 ist mit dem Pumpgehäuse 26 verschraubt. Ferner weist die Schwingkolbenpumpvorrichtung ein Dichtelement 56 auf. Das Dichtelement 56 ist als ein Dichtring ausgebildet. Das Dichtelement 56 ist zwischen dem Pumpgehäuse 26 und dem Kompressionskammergehäuse 10 angeordnet. Alternativ oder zusätzlich kann das Kompressionskammergehäuse 10 stoffschlüssig mit dem Pumpgehäuse 26 verbunden und/oder insbesondere einstückig mit dem Pumpgehäuse 26 ausgebildet sein.

Die Schwingkolbenpumpvorrichtung umfasst wenigstens ein Ventilkammergehäuse 16. Das Ventilkammergehäuse 16 weist zumindest eine Ventilkammer 58 auf. Das Ventilkammergehäuse 16 ist zumindest teilweise einstückig mit dem Kompressionskammergehäuse 10 ausgebildet. Im vorliegenden Fall ist das Ventilkammergehäuse 16 vollständig einstückig mit dem Kompressionskammergehäuse 10 ausgebildet. Die Schwingkolbenpumpvorrichtung weist zumindest ein weiteres Ventil 30 auf. Das weitere Ventil 30 verschließt in zumindest einem Betriebszustand die Ventilkammer 58.

Das Kompressionskammergehäuse 10 umfasst wenigstens einen Fluidkanal 12. Der Fluidkanal 12 weist zumindest eine Abwinklung 14 auf. Die Abwinklung 14 ist ein Zwischenabschnitt 78 des Fluidkanals 12. Entlang des Zwischenabschnitts 78 variiert eine Hauptströmungsrichtung des Fluidkanals 12. Die Kompressionskammer 52 ist strömungstechnisch, insbesondere in einer Förderrichtung der Schwingkolbenpumpe 32 betrachtet, vor der Abwinklung 14 angeordnet. Das Ventilkammergehäuse 16 ist strömungstechnisch, insbesondere in einer Förderrichtung der Schwingkolbenpumpe 32 betrachtet, vor der Abwinklung 14 angeordnet. Das Ventil 30 ist strömungstechnisch, insbesondere in Förderrichtung der Schwingkolbenpumpe 32 betrachtet, hinter der Abwinklung 14 des Fluidkanals 12 angeordnet. Die Abwinklung 14 weist einen Winkel 18 von zumindest 45° auf. Die Hubrichtung 22 schließt einen Winkel 18 mit zumindest einer Hauptströmungsrichtung innerhalb der Abwinklung 14 von zumindest 45° ein. Die Hubrichtung 22 schließt einen Winkel 18 mit zumindest einer Hauptströmungsrichtung innerhalb der Abwinklung 14 von zumindest im Wesentlichen 90° ein.

Der Fluidkanal 12 umfasst zumindest einen ersten Teilabschnitt 74. Ferner umfasst der Fluidkanal 12 einen zweiten Teilabschnitt 76. Der Zwischenabschnitt 78 ist vorzugsweise unmittelbar zwischen dem ersten Teilabschnitt 74 und dem zweiten Teilabschnitt 76 angeordnet. Der erste Teilabschnitt 74 bildet zumindest teilweise die Kompressionskammer 52 aus. Der Zwischenabschnitt 78 bildet zumindest teilweise die Kompressionskammer 52 aus. Der zweite Teilabschnitt 76 bildet zumindest teilweise die Ventilkammer 58 aus.

Der erste Teilabschnitt 74 und der zweite Teilabschnitt 76 sind zueinander winklig ausgerichtet. Der erste Teilabschnitt 74 weist eine erste Haupterstreckungsrichtung 80 auf. Ferner weist der erste Teilabschnitt 74 eine erste Hauptströmungsrichtung 82 auf. Der zweite Teilabschnitt 76 weist eine zweite Haupterstreckungsrichtung 84 auf. Der zweite Teilabschnitt 76 weist eine zweite Hauptströmungsrichtung 86 auf. Die erste Haupterstreckungsrichtung 80 und/oder die erste Hauptströmungsrichtung 82 ist winklig zur zweiten Haupterstreckungsrichtung 84 und/oder zur zweiten Hauptströmungsrichtung 86 ausgerichtet. Die erste Haupterstreckungsrichtung 80 und/oder die erste Hauptströmungsrichtung 82 und die zweite Haupterstreckungsrichtung 84 und/oder die zweite Hauptströmungsrichtung 86 schließen den Winkel 18 von zumindest im Wesentlichen 90° ein. Die erste Haupterstreckungsrichtung 80 und/oder die erste Hauptströmungsrichtung 82 ist zumindest im Wesentlichen parallel zu der Hubrichtung 22 und insbesondere zu der Drehachse 28. Die zweite Haupterstreckungsrichtung 84 und/oder die zweite Hauptströmungsrichtung 86 ist zumindest im Wesentlichen senkrecht zu der Hubrichtung 22 und insbesondere zu der Drehachse 28.

In einem Betrieb der Schwingkolbenpumpvorrichtung wird der Kolben 44 mittels der Aktoreinheit 48 aus einer Ruhelage verschoben. Der Kolben 44 wird in Richtung des Fluidauslasses 38 verschoben. Das Ventil 30 verschließt die Fortsatzausnehmung 68. Der Kolbenfortsatz 62 wird in die Kompressionskammer 52 eingeführt. Ein Fluid, welches sich in der Kompressionskammer 52 befindet, wird von dem Kolbenfortsatz 62 komprimiert. Ein Druck innerhalb der Kompressionskammer 52 wird erhöht. Das Fluid wird in der ersten Hauptströmungsrichtung 80 aus der Kompressionskammer 52 gepresst. Das Fluid durchfließt die Abwinklung 14. Ein Fluiddruck vor der Ventilkammer 58 wird erhöht. Das Ventil 30 wird durch den erhöhten Fluiddruck geöffnet. Das Fluid fließt durch die Ventilkammer 58 in der zweiten Hauptströmungsrichtung 86 ab. Der Fluiddruck vor der Ventilkammer 58 verringert sich. Das Ventil 30 wird wieder verschlossen.

In einem weiteren Betriebszustand wird der Kolben 44 durch das erste elastische Element 42 und das zweite elastische Element 44 in die Ruheposition zurückgeführt. Der Fluiddruck innerhalb der Kompressionskammer 52 wird verringert. Das Kolbenventil 70 öffnet sich. Die Kompressionskammer 52 wird mit dem Fluid befüllt. Der Fluiddruck innerhalb der Kompressionskammer 52 erhöht sich. Das Kolbenventil 70 schließt sich wieder. Ferner fließt ein Fluid durch die erste Ausnehmung 64 und die zweite Ausnehmung 66 in das Pumpgehäuse 26 nach.

## Patentansprüche

1. Schwingkolbenpumpvorrichtung mit zumindest einem Kompressionskammergehäuse (10), welches wenigstens einen Fluidkanal (12) umfasst, wobei der Fluidkanal (12) zumindest eine Abwinklung (14) aufweist, und mit einer Kolbeneinheit (20), die dazu vorgesehen ist, in einem Betriebszustand ein Fluid in zumindest einer Hubrichtung (22) zu fördern, wobei die Kolbeneinheit (20) einen Kolben (44) umfasst, der einen Kolbengrundkörper (60) und einen Kolbenfortsatz (62) umfasst, und wobei der Kolben (44) in zumindest einem Betriebszustand zumindest teilweise in dem Kompressionskammergehäuse (10) angeordnet ist, **dadurch gekennzeichnet, dass** die Schwingkolbenpumpvorrichtung ein Pumpgehäuse (26) aufweist, wobei das Pumpgehäuse (26) einen Fluideinlass (36) und einen Fluidauslass (38) aufweist, wobei das Kompressionskammergehäuse (10) an dem Pumpgehäuse (26), insbesondere an dem Fluidauslass (38), angeordnet ist, wobei der Kolbenfortsatz (62) eine Fortsatzausnehmung (68) aufweist, wobei die Fortsatzausnehmung (68) zum Auslass eines Fluids vorgesehen ist.

2. Schwingkolbenpumpvorrichtung nach Anspruch 1, **gekennzeichnet durch** wenigstens ein Ventilkammergehäuse (16), das zumindest teilweise einstückig mit dem Kompressionskammergehäuse (10) ausgebildet ist.

3. Schwingkolbenpumpvorrichtung nach Anspruch 1 oder 2, **dadurch gekennzeichnet, dass** die Abwinklung (14) einen Winkel (18) von zumindest 45° aufweist.

4. Schwingkolbenpumpvorrichtung nach einem der vorhergehenden Ansprüche, **gekennzeichnet durch** zumindest eine Kolbeneinheit (20), welche ein Fluid in zumindest einer Hubrichtung (22) fördert, die einen Winkel (18) mit zumindest einer Hauptströmungsrichtung innerhalb der Abwinklung (14) von zumindest 45° einschließt.

5. Schwingkolbenpumpvorrichtung nach Anspruch 4, **dadurch gekennzeichnet, dass** die Hubrichtung (22) einen Winkel (18) mit zumindest einer Hauptströmungsrichtung innerhalb der Abwinklung (14) von zumindest im Wesentlichen 90° einschließt.

6. Schwingkolbenpumpvorrichtung nach Anspruch 4 oder 5, **dadurch gekennzeichnet, dass** die Kolbeneinheit (20) zumindest einen Kolben (44) aufweist, welcher in zumindest einem Betriebszustand zumindest teilweise in dem Kompressionskammergehäuse (10) angeordnet ist.

7. Schwingkolbenpumpvorrichtung nach einem der vorhergehenden Ansprüche, **gekennzeichnet durch** zumindest ein Pumpgehäuse (26), relativ zu welchem das Kompressionskammergehäuse (10) in verschiedenen Drehlagen um eine Drehachse (28) anordenbar ist.

8. Schwingkolbenpumpvorrichtung nach einem der vorhergehenden Ansprüche, **gekennzeichnet durch** zumindest ein Ventil (30), welches strömungstechnisch hinter der Abwinklung (14) des Fluidkanals (12) angeordnet ist.

9. Schwingkolbenpumpvorrichtung zumindest nach einem der vorhergehenden Ansprüche, **dadurch gekennzeichnet, dass** das Kompressionskammergehäuse (10) ein Spritzgussteil ist.

10. Schwingkolbenpumpvorrichtung zumindest nach einem der vorhergehenden Ansprüche, **dadurch gekennzeichnet, dass** der Kolbengrundkörper (60) eine erste Ausnehmung (64) aufweist, die sich in einer Haupterstreckungsrichtung des Kolbens (44) erstreckt und zu einer Fluidzufuhr vorgesehen ist.

11. Schwingkolbenpumpvorrichtung zumindest nach einem der vorhergehenden Ansprüche, **dadurch gekennzeichnet, dass** die Kolbeneinheit (20) zumindest ein Kolbenventil (70) aufweist, das als ein Rückschlagventil ausgebildet ist, wobei das Kolbenventil (70) zumindest teilweise in der Fortsatzausnehmung (68) angeordnet ist.

12. Schwingkolbenpumpe (32) mit zumindest einer Schwingkolbenpumpvorrichtung nach einem der vorhergehenden Ansprüche.

13. Haushaltsgerät (34), insbesondere Kaffeemaschine, mit einer Schwingkolbenpumpe (32) nach Anspruch 10.

## Claims

1. Oscillating piston pump device with at least one compression chamber housing (10)
comprising at least one fluid channel (12), the fluid channel having at least one elbow (14),
and with a piston unit (20) configured to convey in an operating state a fluid in at least one stroke direction (22), the piston unit (20) comprising a piston (44) that has a piston base body (60) and a piston projection (62), and the piston (44) being in at least one operating state arranged at least partly in the compression chamber housing (10),
**characterised in that** the oscillating piston pump device comprises a pump housing (26), the pump housing (26) having a fluid inlet (36) and a fluid outlet (38), the compression chamber housing (10) being arranged at the pump housing (26), in particular at the fluid outlet (38),
the piston projection (62) having a projection recess (68),
the projection recess (68) being configured for an outlet of a fluid.

2. Oscillating piston pump device according to claim 1,
**characterised by** at least one valve chamber housing (16) realized at least partly integrally with the compression chamber housing (10).

3. Oscillating piston pump device according to claim 1 or 2,
**characterised in that** the elbow (14) has an angle (18) of at least 45°.

4. Oscillating piston pump device according to one of the preceding claims,
**characterised by** at least one piston unit (20) conveying a fluid in at least one stroke direction (22) that includes an angle (18) of at least 45° with at least one main flow direction within the elbow (14).

5. Oscillating piston pump device according to claim 4,
**characterised in that** the stroke direction (22) includes an angle of at least 90° with at least one main flow direction within the elbow (14).

6. Oscillating piston pump device according to claim 4 or 5,
**characterised in that** the piston unit (20) comprises at least one piston (44), which is in at least one operating state arranged at least partly in the compression chamber housing (10).

7. Oscillating piston pump device according to one of the preceding claims,
**characterised by** at least one pump housing (26), with respect to which the compression chamber housing (10) is arrangeable in various rotary positions around a rotary axis (28).

8. Oscillating piston pump device according to one of the preceding claims,
**characterised by** at least one valve (30) which is arranged fluidically downstream of the elbow (14) of the fluid channel (12).

9. Oscillating piston pump device at least according to one of the preceding claims,
**characterised in that** the compression chamber housing (10) is an injection-moulded part.

10. Oscillating piston pump device at least according to one of the preceding claims,
**characterised in that** the piston base body (60) has a first recess (64), which extends in a main extension direction of the piston (44) and is configured for fluid alimentation.

11. Oscillating piston pump device at least according to one of the preceding claims,
**characterised in that** the piston unit (20) comprises at least one piston valve (70) that is realized as a non-return valve, the piston valve (70) being arranged at least partly in the projection recess (68).

12. Oscillating piston pump (32) with at least one oscillating piston pump device according to one of the preceding claims.

13. Household apparatus (34), in particular coffee machine, with an oscillating piston pump (32) according to claim 10.

## Revendications

1. Dispositif de pompe à piston oscillant
avec au moins un boîtier de chambre à compression (10) comprenant au moins un canal de fluide (12), le canal de fluide (12) ayant au moins un coude (14),
et avec une unité à piston (20) prévue à convoyer un fluide dans au moins une direction de levée (22) en état opératif, l'unité à piston (20) comprenant un piston (44) qui comporte un corps de base de piston (60) et une projection de piston (62), et le piston (44) étant disposé au moins partiellement dans le boîtier de chambre à compression (10) en au moins un état opératif,
**caractérisé en ce que** le dispositif de pompe à piston oscillant comprend un boîtier de pompe (26), le boîtier de pompe (26) ayant une entrée de fluide (36) et une sortie de fluide (38),
le boîtier de chambre à compression (10) étant disposé sur le boîtier de pompe (26), en particulier à la sortie de fluide (38),
la projection de piston (62) ayant un enfoncement de projection (68), l'enfoncement de projection (68) étant prévu pour la sortie d'un fluide.

2. Dispositif de pompe à piston oscillant selon la revendication 1,
**caractérisé par** au moins un boîtier de chambre de soupape (16) formé au moins partiellement intégralement avec le boîtier de chambre à compression (10).

3. Dispositif de pompe à piston oscillant selon la revendication 1 ou 2,
**caractérisé en ce que** le coude (14) comporte un angle (18) d'au moins 45°.

4. Dispositif de pompe à piston oscillant selon l'une des revendications précédentes,
**caractérisé par** au moins une unité de piston (20) convoyant un fluide dans au moins une direction de levée (22) qui inclut un angle (18) d'au moins 45° avec au moins une direction de flux principale dans le coude (14).

5. Dispositif de pompe à piston oscillant selon la revendication 4,
**caractérisé en ce que** la direction de levée (20) inclut un angle (18) d'au moins sensiblement 90° avec au moins une direction de flux principale dans le coude (14).

6. Dispositif de pompe à piston oscillant selon la revendication 4 ou 5,
**caractérisé en ce que** l'unité de piston (20) comprend au moins un piston (44) qui est en au moins un état opératif disposé au moins partiellement dans le boîtier de chambre à compression (10).

7. Dispositif de pompe à piston oscillant selon l'une des revendications précédentes,
**caractérisé par** au moins un boîtier de pompe (26) par rapport auquel le boîtier de chambre à compression (10) peut être disposé en positions de rotation différentes autour d'un axe rotatif (28).

8. Dispositif de pompe à piston oscillant selon l'une des revendications précédentes,
**caractérisé par** au moins une soupape (30) disposé fluidiquement en aval du coude (14) du canal de fluide (12).

9. Dispositif de pompe à piston oscillant au moins selon l'une des revendications précédentes,
**caractérisé en ce que** le boîtier de chambre à compression (10) est une pièce moulée par injection.

10. Dispositif de pompe à piston oscillant au moins selon l'une des revendications précédentes,
**caractérisé en ce que** le corps de base de piston (60) comporte un premier enfoncement (64) qui s'étend dans une direction d'étendue principale du piston (44) et est prévu pour une alimentation de fluide.

11. Dispositif de pompe à piston oscillant au moins selon l'une des revendications précédentes,
**caractérisé en ce que** l'unité de piston (20) comprend au moins une soupape-piston (70) réalisé comme soupape de retenue, la soupape-piston (70) étant disposée au moins partiellement dans l'enfoncement de projection (68).

12. Pompe à piston oscillant (32) avec au moins un dispositif de pompe à piston oscillant selon l'une des revendications précédentes.

13. Appareil ménager (34), notamment machine à café, avec une pompe à piston oscillant (32) selon la revendication 10.
